# EUROPÄISCHE PATENTSCHRIFT

(11) **EP 2 286 920 B1**
(45) Veröffentlichungstag und Bekanntmachung des Hinweises auf die Patenterteilung: **31.05.2017**
(21) Anmeldenummer: 10011967.6
(22) Anmeldetag: 24.01.2006
(51) Int. Cl.: B01L 3/02

(54) **Verfahren zum Herstellen eines porösen Filters für eine Filterpipettenspitze**
Process for manufacturing a porous filter for a pipette tip
Procédé de fabrication d'un filtre poreux pour embout de pipette

(30) Priorität: 05.02.2005 DE 102005005437
(43) Veröffentlichungstag der Anmeldung: 23.02.2011
(62) Teilanmeldung aus: 06001381.0
(73) Patentinhaber: Eppendorf AG, 22339 Hamburg (DE)
(72) Erfinder: Reimann, Thomas, 21502 Geesthacht (DE); Ziegmann, Christian, 22926 Ahrensburg (DE)
(74) Vertreter: Hauck Patentanwaltspartnerschaft mbB

(56) Entgegenhaltungen:
- EP-A- 1 095 703
- WO-A-00/29112
- WO-A-97/26540
- WO-A-99/67647
- WO-A2-02/36708
- JP-A- 11 347 323
- US-B1- 6 451 260

## Beschreibung

Die Erfindung bezieht sich auf ein Verfahren zum Herstellen eines porösen Filters für eine Filterpipettenspitze.

Pipettenspitzen werden zusammen mit Pipetten zum Dosieren von Flüssigkeiten verwendet. Pipettenspitzen sind als Röhrchen mit einer verhältnismäßig großen Öffnung am einen Ende zum Verbinden mit einer Pipette, einer verhältnismäßig kleinen Öffnung am anderen Ende für den Durchgang von Flüssigkeit und einem Durchgangskanal zwischen der großen Öffnung und der kleinen Öffnung ausgebildet. Pipetten weisen einen Aufnahmeschaft zum Aufstecken der großen Öffnung oder eine Aufnahme zum Einstecken des einen Endes der Pipettenspitze auf. Ferner haben sie eine Gasverdrängungseinrichtung, die zumeist als Kolben-Zylinder-Einheit ausgeführt ist. Die Gasverdrängungseinrichtung ist über eine Durchgangsöffnung des Aufnahmeschaftes oder der Aufnahme mit der großen Öffnung der lösbar an der Pipette gehaltenen Pipettenspitze verbunden.

Mittels der Gasverdrängungseinrichtung wird eine Luftsäule oder ein andere Gassäule verschoben, um Flüssigkeit in die Pipettenspitze einzusaugen und aus dieser auszustoßen. Wird die Gassäule von der Pipettenspitze weg verschoben, wird eine bestimmte Flüssigkeitsmenge durch die kleine Öffnung in den Durchgangskanal der Pipettenspitze eingesogen. Durch Verschieben der Gassäule zur Pipettenspitze hin wird eine Flüssigkeitsmenge aus dem Durchgangskanal durch die kleine Öffnung abgegeben.

Pipettenspitzen werden meistens nach erfolgter Dosierung gegen frische Pipettenspitzen ausgetauscht, um eine Verunreinigung nachfolgend pipettierter Flüssigkeiten durch Restflüssigkeit zu vermeiden. Pipettenspitzen für den Einmalgebrauch sind meistens aus Kunststoff ausgeführt.

Beim Aufnehmen und Abgeben von Flüssigkeit können feinste Tröpfchen der Flüssigkeit aus der Pipettenspitze in die Pipette gelangen. Bei übermäßiger Gasverdrängung können auch große Mengen der Flüssigkeit durch die große Öffnung in die Pipette eingesogen werden. Diese Flüssigkeit kann bei nachfolgenden Pipettierungen in die Pipettenspitze gelangen. Infolgedessen kann es zur Verunreinigung von Proben kommen.

Zur Vermeidung einer Verunreinigung der Pipette sind bereits Filterpipettenspitzen bekannt. Diese haben einen den Querschnitt des Durchgangskanals ausfüllenden, porösen Filter. Der Filter ist meist in der Nähe der großen Öffnung angeordnet. Er ist z.B. in den Durchgangskanal des Röhrchens eingepreßt bzw. an mindestens einem Vorsprung im Durchgangskanal abgestützt. Der Bereich des Durchgangskanals zwischen Filter und kleiner Öffnung dient der Aufnahme von Flüssigkeit. Der Filter hält Aerosole und Flüssigkeit in der Filterpipettenspitze zurück, so daß sie nicht durch die große Öffnung in die Pipette gelangen. Filter sind z.B. als poröse Stöpsel aus Kunststoff ausgebildet. Sie können durch Sintern kleinster Kunststoffpartikel gebildet sein.

Bekannte Filter haben eine unzureichende Sperrwirkung für Aerosole und Flüssigkeiten. Bekannt sind bereits Filter mit einem Additiv, das bei Flüssigkeitskontakt die Poren des Filters verstopft. Diese Filter sind zwar flüssigkeitsdicht, lassen jedoch Aerosole durch. Das Additiv kann auskrümeln bzw. ausbluten und eine Probe kontaminieren. Außerdem kann die oftmals wertvolle Flüssigkeit bei Kontakt mit dem Filter kontaminiert bzw. schlecht wiedergewonnen werden. Das verstopfte Filter läßt nämlich ein Ausstoßen der Probe nicht zu.

Aus der DE 36 35 598 C2 ist eine Filterpipettenspitze bekannt, bei der der Filter aus mehreren Schichten ausgeführt, die scheibenweise übereinander angeordnet sind und progressive Filterwirkung aufweisen, indem sich die Durchlässigkeit von Scheibe zu Scheibe ändert, insbesondere abnimmt. Gemäß einer Ausgestaltung sind Scheiben verschiedener Dichte übereinandergeschichtet. Durchgehende Medien kommen bei zunehmender Dichte mehrfach mit Wandteilen von Kapillardurchgängen in Berührung. Dieses kann zur Auslösung von Reaktionen ausgenutzt werden, aber an sich auch für eine gesteigerte Filterwirkung, wenn nämlich die Saug- oder Druckkraft eine bestimmte Höhe erreicht oder überschreitet. Somit weist die Filterpipettenspitze einen erhöhten Druckverlust auf, der Dosierungsungenauigkeiten oder Fehlbedienungen zur Folge haben kann.

Eine Vielzahl Filterpipettenspitzen mit unterschiedlichen Eigenschaften ist bekannt. So werden zur Aufnahme unterschiedlicher Dosiermengen Filterpipettenspitzen mit verschiedenen Abmessungen zur Verfügung gestellt. Außerdem sind Filterpipettenspitzen bekannt, deren Filter bei Kontakt mit Flüssigkeiten in einer bestimmten Weise reagieren, z.B. verstopfen oder ihre Farbe ändern. Ferner sind Filterpipettenspitzen aus unterschiedlichen Materialien und Filterpipettenspitzen mit unterschiedlichen Reinheitsgraden bekannt. Die Unterscheidung der unterschiedlichen Filterpipettenspitzen aufgrund ihres äußeren Erscheinungsbildes ist problematisch.

Die WO 02/36708 A2 beschreibt in Beispiel 4 die Herstellung eines Dreischichtfilters, in dem drei UHMWPE-Pulverschichten, von denen eine SAP enthält, in einer Form übereinander geschichtet und durch Sintern miteinander verbunden werden. Beim Übereinanderschichten der Schichten des Filters können sich die aneinander grenzenden Schichten miteinander mischen, wodurch die Sperrwirkung verschlechtert wird. Hierdurch wird die Pipettierwirkung einer Filterpipettenspitze beeinträchtigt, die mit dem Filter ausgerüstet wird. In Beispiel 4 ist als alternatives Herstellungsverfahren angegeben, zwei UHMWPE-Pulverschichten zunächst zu Sintern und eine SAP enthaltene UHMWPE-Pulverschicht zu Sintern. Die Schichten sollen dann durch Heizen miteinander verschmolzen werden, optional unter Druck.

Die US 6,451,260 beschreibt in Beispiel 19 die Herstellung eines Filters, bei dem eine grobe Partikelfraktion und eine feine Partikelfraktion übereinandergeschichtet, gemeinsam gepresst und gesintert werden, um ein Filterelement zu erhalten. Auch hierbei kann es leicht zum Vermischen aneinandergrenzender Schichten kommen.

Die JP-A-11-347323 beschreibt das Sintern ein- oder mehrschichtiger Polymerpulver oder eines Gemisches, ohne dass die Schichten komprimiert werden.

Die EP 1 095 703 A1 beschreibt in den Beispielen 1 bis 5 das Pressen eines UHMWPE-Pulvers in einer Form direkt vor dem Sintern zum Herstellen eines Filters für eine Filterpipettenspitze.

Die EP 1 095 703 A1 beschreibt eine Pipettenspitze mit gesintertem Polymerfilter, bei dem das Granulat vor der Sinterung komprimiert wird.

Davon ausgehend liegt der Erfindung die Aufgabe zugrunde, ein Verfahren zur Herstellung eines porösen Filters für eine Filterpipettenspitze zur Verfügung zu stellen, der ohne Beeinträchtigung der Pipettierung eine verbesserte Sperrwirkung aufweist.

Diese Aufgabe wird durch ein Verfahren mit den Merkmalen des Anspruchs 1 gelöst. Vorteilhafte Ausgestaltungen des Verfahrens und Verwendungen des porösen Filters sind in Unteransprüchen angegeben.

Die grobporige Schicht des Filters mit einer Porengröße von etwa 20 bis 50 µm dient der Volumen- und Vorfiltration. Diese Schicht wird nachfolgend auch grobporige Schicht genannt. Die grobporige Schicht bietet einem durchgehenden Fluid eine Vielzahl Hindernisse, an denen Tröpfchen bzw. Partikel hängen bleiben können. Die feinporige Schicht des Filters mit einer Porengröße von maximal etwa 20 µm trennt insbesondere Tröpfchen bzw. Partikel mit die Porengröße übersteigenden Abmessungen ab, die durch die grobporige Schicht hindurch gelangen. Diese Schicht wird nachfolgend auch feinporige Schicht genannt. Auch die adsorptive Filterwirkung auf kleinere Partikel wird in der feinporigen Schicht optimal ausgenutzt. Die Abtrennung ist nahezu vollständig, weil die feinporige Schicht einen Abschnitt des Durchgangskanals ausfüllt und damit den Querschnitt des Durchgangskanals versperrt. Die Sperrwirkung übersteigt die Sperrwirkung herkömmlicher, einschichtiger Filter, bei denen die kleinen und großen Poren über das gesamte Volumen verteilt sind, so daß die kleinen Poren nicht in der Lage sind, feinste Tröpfchen bzw. Partikel vollständig zurückzuhalten. Da der Filter aus einer grobporigen und einer feinporigen Schicht zusammengesetzt ist, kann der Druckverlust dem Druckverlust herkömmlicher, einschichtiger Filter entsprechen, so daß die Dosiergenauigkeit nicht beeinträchtigt wird. Anders als bei dem bekannten mehrschichtigen Filter ist eine erhöhte Saug- oder Druckkraft für das Erreichen der gesteigerten Filterwirkung nicht erforderlich. Die Filterpipettenspitze ist insbesondere einsetzbar beim Pipettieren zum Verhindern des Eindringens von Aerosolen oder Biomolekülen (z.B. DNA) in die Pipette oder zum Abtrennen von flüssigen oder festen Partikeln aus einer Flüssigkeit bei der Filtration oder Extraktion.

Die Bestimmung der Porengröße der Schichten des erfindungsgemäßen Filters erfolgt durch Quecksilberintrusion wie in der DIN 66133 vom Juni 1993 angegeben. Die DIN 66133 kann über den Beuth-Verlag GmbH, Burggrafenstraße 6, 10787 Berlin, bezogen werden. Die Angaben in der DIN 66133 zur Durchführung und Auswertung der Messungen werden durch Bezugnahme in die vorliegende Anmeldung einbezogen. Die Messung der Porengröße erfolgt für die Schichten getrennt nach Zerlegung des Filters (z.B. durch Zerschneiden mittels Skalpell) in seine beiden Schichten oder in Abschnitte davon.

Die Porengrößen der feinporigen Schicht und der grobporigen Schicht sind unterschiedlich, so daß bei einer Porengröße der feinporigen Schicht von 20 µm die Porengröße der grobporigen Schicht mehr als 20 µm beträgt. Bei einer Porengröße der grobporigen Schicht von 20 µm beträgt die Porengröße der feinporigen Schicht unter 20 µm. Gemäß einer Ausgestaltung ist die Porengröße der feinporigen Schicht mindestens 5 µm kleiner als die Porengröße der grobporigen Schicht. Gemäß einer weiteren Ausgestaltung ist sie 10 bis 40 µm kleiner.

Gemäß einer Ausgestaltung hat die feinporige Schicht eine Porengröße von maximal etwa 10 µm. Gemäß einer weiteren Ausgestaltung hat die grobporige Schicht eine Porengröße von etwa 20 bis 40 µm.

In Filterpipettenspitzen kann die feinporige Schicht des Filters näher an der kleinen Öffnung als die grobporige Schicht angeordnet sein. Diese Ausgestaltung kann z.B. sinnvoll sein, um das Eindringen von Verunreinigungen aus einer Pipette in die Pipettenspitze zu vermeiden. Gemäß einer bevorzugten Ausgestaltung ist die feinporige Schicht näher an der großen Öffnung angeordnet als die grobporige Schicht. Diese Ausgestaltung verhindert effektiv die Verunreinigung einer Pipette.

Gemäß einer Ausgestaltung ist die Erstreckung in Richtung des Durchgangskanals der feinporigen Schicht geringer als die Erstreckung der grobporigen Schicht. Durch die verhältnismäßig dicke grobporige Schicht wird eine besonders wirksame Volumen- und Vorfiltration erreicht, die in Kombination mit der Feinfiltration durch die verhältnismäßig dünne feinporige Schicht die Sperrwirkung weiter verbessert. Einbezogen sind auch Filter, die mehr als zwei Schichten aufweisen. Die Filter können z.B. beidseitig einer feinporigen Schicht eine grobporige Schicht aufweisen.

Ferner wird die Aufgabe durch ein Verfahren mit den Merkmalen von Anspruch 2 gelöst. Vorteilhafte Ausgestaltungen des Verfahrens und Verwendungen des porösen Filters sind in Unteransprüchen angegeben.

Die hydrophile oder hydrophilere Schicht des Filters dient insbesondere der Bindung von Tröpfchen wässriger Flüssigkeiten. Aerosole werden von dieser Schicht bevorzugt angelagert. Ebenso bindet DNA und dgl. Biomoleküle bevorzugt an hydrophilen Oberflächen. Die hydrophobe oder hydrophobere Schicht dient bevorzugt der Anlagerung von Proteinen, die bevorzugt von hydrophoben Schichten gebunden werden. Sie weist darüber hinaus eine flüssigkeitsabweisende Charakteristik auf. Der Filter ist infolgedessen gleichsam als Aerosol- und Biomolekül-Barriere wirksam. Die Filterpipettenspitze weist eine insgesamt verbesserte Sperrwirkung auf.

Gemäß einer Ausgestaltung ist die hydrophile Schicht näher an der großen Öffnung als die hydrophobe Schicht angeordnet. Beim Pipettieren weist die hydrophobe Schicht Tröpfchen wässriger Flüssigkeiten ab und verhindert, dass diese in den Filter eintreten. Trotzdem eingetretene Tröpfchen werden von der hydrophilen Schicht gebunden und an einem Austritt aus der großen Öffnung gehindert. Biomoleküle wie DNA werden von der hydrophilen Schicht abgefangen.

Gemäß einer Ausgestaltung ist die Erstreckung in Richtung des Durchgangskanals der hydrophilen Schicht größer als die Erstreckung der hydrophoben Schicht. Hierdurch werden wässrige Flüssigkeiten besonders effektiv in der Filterpipettenspitze zurückgehalten.

Ferner wird die Aufgabe durch ein Verfahren mit den Merkmalen des Anspruchs 3 gelöst. Vorteilhafte Ausgestaltungen des Verfahrens und Verwendungen des porösen Filters sind in Unteransprüchen angegeben.

Bei den Färbungen handelt es sich um mindestens ein zusätzliches Merkmal des Filters, das eine Eigenschaft und/oder Ausrichtung der Filterpipettenspitze und/oder des Filters kennzeichnet. Das Merkmal ist - ggfs. nach vorheriger physikalischer oder chemischer Einwirkung - mittels eines menschlichen Sinnesorgans (z.B. das Auge) und/oder eines Sensors (z.B. ein Photosensor) feststellbar.

Die Färbungen können verschiedenen Zwecken dienen. Beispielsweise dienen die Färbungen der Kennzeichnung der Filterpipettenspitze. Z.B. ist einer Filterpipettenspitze mit einer bestimmten Eigenschaft bestimmte Färbungen des Filters zugeordnet, die eine eindeutige Feststellung ermöglicht, daß es sich um eine Filterpipettenspitze mit der betreffenden Eigenschaft handelt. Die Färbungen kennzeichnen z.B. das Aufnahmevolumen der Filterpipettenspitze für flüssige Probe, bestimmte Reaktionen des Filters bei Kontakt mit einer oder verschiedenen Flüssigkeiten, Materialien, aus denen die Filterpipettenspitze hergestellt ist, den Reinheitsgrad, mit der die Filterpipettenspitze bereitgestellt wird, oder den Hersteller der Filterpipettenspitze.

Ferner können die Färbungen als Originalitäts- oder Echtheitsmerkmal dienen, das es z.B. ermöglicht, die Originalität oder Echtheit der Filterpipettenspitze festzustellen. Für die Überprüfung der Originalität bzw. Echtheit ist das Filter gemäß einer Ausgestaltung mit Färbungen versehen, die mittels technischer Hilfsmittel feststellbar sind.

Ferner können die Färbungen dem Zweck dienen, bei der Produktion die Ausrichtung der Filter zu erkennen, um diese lagerichtig in die Filterpipettenspitze einzubringen. Bei Filtern mit mehreren miteinander verbundenen Schichten oder einer in Axialrichtung veränderlichen Porengröße ist es mitunter nicht möglich, deren Ausrichtung auf einfache Weise zu erfassen. Hier können die von der menschlichen Sinneswahrnehmung und/oder mittels eines Sensors gut erfassbaren Färbungen dazu dienen, die jeweilige Ausrichtung des Filters festzustellen, um diesen in der gewünschten Ausrichtung in den Durchgangskanal einzusetzen.

Die Färbungen können insbesondere im Hinblick auf den jeweiligen Zweck unterschiedlich gewählt werden. Der Filter weist Färbungen auf, die von einer herkömmlichen weißen Färbung des Filters abweichen. Die Färbungen können ausgewählt sein aus sämtlichen bunten Farben (z.B. blau, grün, gelb, rot) und/oder aus sämtlichen unbunten Farben mit Ausnahme von weiß (d.h. schwarz und Grautöne). Die Färbungen werden durch Verwendung gefärbten Kunststoff-Granulats bei der Herstellung der Filter erzeugt. Bevorzugt werden inerte Kunststoffe verwendet, aus denen Farben nicht oder sehr schwer herauslösbar sind. Ferner werden Pigmente bevorzugt, die molekularbiologische Proben nicht verunreinigen.

Die Färbungen des Filters sind sehr gut erkennbar. Dies kann bei der Produktion für die lagerichtige Einbringung des Filters in die Filterpipettenspitze genutzt werden. Bei der fertigen Filterpipettenspitze sind die Färbungen des Filters z.B. durch die Öffnungen des Röhrchens und/oder durch ein zumindest teilweise transparent ausgeführtes Röhrchen hindurch sehr gut erkennbar. Die Färbungen sind sehr viel besser erkennbar, als beispielsweise eine beim Spritzgießen als Profilierung oder durch Aufdrucken auf der Oberfläche des Röhrchens angebrachte Kennzeichnung. Infolgedessen sind die Färbungen eine hervorragende Kennzeichnung der Filterpipettenspitze.

Filterpipettenspitzen mit bestimmten Eigenschaften können bestimmte Färbungen des Filters zugeordnet werden, die eine eindeutige Feststellung ermöglichen, ob es sich um Filterpipettenspitzen mit den betreffenden Eigenschaften handelt. Beispielsweise können Filterpipettenspitzen, die für die Aufnahme unterschiedlicher Dosiermengen bestimmt sind, deren Filter bei Kontakt mit unterschiedlichen Flüssigkeiten in einer bestimmten Weise reagieren, die aus unterschiedlichen Materialien bestehen oder unterschiedliche Reinheitsgrade aufweisen, mit eindeutigen Kennzeichnungen versehen werden. Auch ist es möglich, mit Hilfe der Färbungen des Filters auf einen bestimmten Hersteller hinzuweisen. Die Kennzeichnungen können zur maschinellen Erkennung von Filterpipettenspitzen z.B. bei der Fertigung oder bei der Handhabung im Laborautomaten oder bei der visuellen Erkennung durch Laborpersonal genutzt werden.

Die Färbungen können ausgewählt sein aus sämtlichen bunten Farben (z.B. blau, grün, gelb, rot) und/oder unbunten Farben (schwarz, weiß und Grautöne). Die Färbungen können durch Verwendung gefärbten Kunststoff-Granulats bei der Herstellung der Filter erzeugt werden. Bevorzugt werden inerte Kunststoffe verwendet, aus denen Farben nicht oder sehr schwer herauslösbar sind. Ferner werden Pigmente bevorzugt, die molekularbiologische Proben nicht verunreinigen.

Gemäß einer weiteren Ausgestaltung ist die näher an der kleinen Öffnung angeordnete Schicht des Filters weiß. Die weiße Farbe signalisiert dem Anwender, dass die Filterpipettenspitze einen inerten Filter aufweist.

Das Röhrchen ist gemäß einer Ausgestaltung in dem den Filter umgebenden Bereich durchsichtig, so daß der Filter von außen sichtbar ist. Gemäß einer bevorzugten Ausgestaltung ist das Röhrchen insgesamt durchsichtig.

Ferner wird die Aufgabe durch ein Verfahren mit den Merkmalen des Anspruchs 4 gelöst. Vorteilhafte Ausgestaltungen des Verfahrens und Verwendungen des porösen Filters sind in Unteransprüchen angegeben.

Der Superabsorber quillt bei Flüssigkeitskontakt auf und dichtet das Filter ab, so daß eingetretene Flüssigkeit nicht hindurchtritt und in eine mit der Filterpipettenspitze gegebenenfalls verbundene Pipette eintritt und diese kontaminiert. Superabsorber haben ein besseres Quellverhalten als die in Filter herkömmlicher Filterpipettenspitzen mit Flüssigkeits-Sperrwirkung eingesetzten Additive auf der Basis von Zellulose ("Zellulosegum"). Mittels Superabsorber wird zwar eine Flüssigkeitsbarriere erreicht. Das Filter bleibt jedoch luftdurchlässig, so daß eine eingesogene Probe verhältnismäßig leicht zurückgewonnen werden kann. Hierzu wird die Pipette wie bei einer üblichen Flüssigkeitsabgabe betätigt, so daß ein an der großen Öffnung anliegender Überdruck die Flüssigkeit aus der Filterpipettenspitze ausstößt.

Superabsorber können große Mengen an Wasser binden, wobei sie stark quellen. Superabsorber sind nicht ohne weiteres in flüssiger Probe lösbar. Diese Fähigkeiten sind typisch für Polymere, die ionische Gruppen enthalten. Die am meisten verbreiteten Superabsorber basieren auf vernetzter Polyacrylsäure. Superabsorber stehen meistens in Form eines Pulvers zur Verfügung, in der Regel mit weißer Farbe. Die Partikelgrößen liegen z.B. im Bereich zwischen einigen 10 µm und einigen 100 µm. Die Firma Degussa AG vermarktet unter der Bezeichnung "Creasorb Produkt Z 1069" einen für den erfindungsgemäßen Einsatz geeigneten Superabsorber. Die Firma BASF vermarktet unter der Bezeichnung "Luquasorb B 1110" einen weiteren für den erfindungsgemäßen Einsatz geeigneten Superabsorber.

Der Superabsorber kann auf verschiedene Weise in den porösen Filter integriert sein. Beispielsweise ist es möglich, den Filter mit mehreren Schichten auszuführen, zwischen denen eine Schicht aus dem Superabsorber angeordnet ist. Gemäß einer bevorzugten Ausgestaltung ist der Superabsorber in Hohlräumen des Filters eingelagert. Der Superabsorber wird in den Hohlräumen im Filter gehalten. Dort kommt er gegebenenfalls direkt in Kontakt mit eindringender Flüssigkeit, so daß er die Hohlräume mehr oder weniger sperrt und einen Flüssigkeitsdurchtritt verhindert.

Gemäß einer Ausgestaltung umfaßt der Filter mindestens zwei in Richtung des Durchgangskanals hintereinander angeordnete Schichten, von denen eine Schicht den Superabsorber enthält.

Die von Superabsorber freie Schicht kann verschiedenen Zwecken dienen. Beispielsweise verbessert sie in der oben beschriebenen Weise den Filtereffekt. Zusätzlich oder stattdessen verhindert sie, daß der Superabsorber ausblutet bzw. auskrümelt und die flüssige Probe kontaminiert. Bei herkömmlichen Filterpipettenspitzen mit selbst abdichtenden Filtern kann das Additiv ausbluten und auskrümeln und Proben kontaminieren, so daß beispielsweise eine PCR inhibiert wird. Bei Flüssigkeitskontakt wird dieses Problem bei herkömmlichen Filterpipettenspitzen noch verstärkt. Die erfindungsgemäße Filterpipettenspitze ermöglicht eine Wiedergewinnung der Probe auch bei leichtem Kontakt mit dem Filter, da die von Superabsorber freie Schicht eine Mitnahme des Superabsorbers durch die Flüssigkeit verhindert. Außerdem kommt die Flüssigkeit erst später mit dem Additiv in Berührung als bei herkömmlichen Filterpipettenspitzen.

Gemäß einer Ausgestaltung ist die den Superabsorber enthaltende Schicht näher an der großen Öffnung als die von Superabsorber freie Schicht angeordnet. Hierdurch wird die flüssige Probe von dem Superabsorber ferngehalten bzw. verhindert die von Superabsorber freie Schicht einen Kontakt der flüssigen Probe mit dem Superabsorber.

Gemäß einer Ausgestaltung ist die den Superabsorber enthaltende Schicht zwischen von Superabsorber freien Schichten angeordnet. Hierdurch kann der Filtereffekt verbessert werden und/oder ein Austreten des Superabsorbers aus beiden Enden des Filters verhindert werden.

Gemäß einer Ausgestaltung weist die von Superabsorber freie Schicht eine Porengröße von maximal etwa 50 µm auf. Diese Schicht verhindert ein Hindurchtreten von Superabsorber, bei dem die Teilchengröße minimal etwa 50 µm beträgt. Gemäß einer weiteren Ausgestaltung weist die von Superabsorber freie Schicht eine Porengröße von maximal etwa 30 µm auf. Diese Schicht verhindert ein Hindurchtreten von Superabsorber, bei denen die Teilchengröße minimal etwa 30 µm beträgt.

Gemäß einer Ausgestaltung enthält der Filter oder die den Superabsorber enthaltende Schicht des Filters etwa 10 bis 30 Gew.-% Superabsorber. Bei diesem Gewichtsanteil zeigt der Superabsorber bereits eine gute Barrierewirkung für Flüssigkeit, wobei dennoch eine Luftdurchlässigkeit erhalten bleiben kann.

Die nachfolgenden Ausgestaltungen betreffen sämtliche vorbeschriebenen Filter.

Der Filter wird gefertigt, indem ein Kunststoffgranulat für eine erste Schicht in eine Form eingebracht und komprimiert wird, dann ein Kunststoffgranulat für eine zweite Schicht in die Form eingebracht und komprimiert wird, die Schichtung gesintert und anschließend der Filterkörper aus der Form ausgestoßen wird. Ein Additiv wird gegebenenfalls vor dem Einbringen in die Form in ein Granulat für eine der Schichten eingemischt. Die Kunststoffgranulate für den mehrschichtigen Filter sind z.B. aus Polyethylen (PE), insbesondere aus UHMW-PE.

Gemäß einer Ausgestaltung weist mindestens eine Schicht des Filters eine Funktionalisierung auf. Die Funktionalisierung bewirkt beispielsweise eine verstärkte Bindung bestimmter Moleküle an die betreffende Schicht. Die Funktionalisierung wird beispielsweise durch Zusätze entsprechender pulverförmiger Additive bei der Herstellung des Filters bewirkt. Mögliche Funktionalisierungen sind reversed-phase-Materialien wie C18, Ionenaustauscher, Aktivkohle o.ä.

Gemäß einer weiteren Ausgestaltung weisen verschiedene Schichten des Filters verschiedene Funktionalisierungen auf.

Die Schichten des Filters sind zu einem einteiligen Filterkörper miteinander verbunden. Der einteilige Filterkörper hat Handhabungsvorteile bei der Herstellung der Filterpipettenspitzen. Ferner werden die Sperrwirkung mindernde Spalten zwischen den verschiedenen Schichten vermieden. Der einteilige Filterkörper weist eine gesteigerte Sperrwirkung bei gleichbleibend gutem Durchflussverhalten auf. Dieser Filter ist z.B. integral gefertigt oder umfaßt zusammengefügte und miteinander verbundene Schichten.

Gemäß einer Ausgestaltung umfaßt der Durchgangskanal zwischen kleiner Öffnung und Filter ein Aufnahmevolumen zum Aufnehmen einer flüssigen Probe und ist der Durchgangskanal zwischen Filter und großer Öffnung ein Kanal zum Verlagern einer Gassäule. Das Aufnahmevolumen hat gemäß einer Ausgestaltung eine definierte Nenngröße, damit der Anwender für eine bestimmte Dosieraufgabe eine geeignete Filterpipettenspitze wählen kann.

Das Röhrchen wird z.B. durch Spritzgießen aus geeignetem Kunststoff (z.B. Polyethylen (PE) oder Polypropylen (PP) hergestellt.

Die Erfindung wird nachfolgend anhand der anliegenden Zeichnung eines Ausführungsbeispiels näher erläutert. In der Zeichnung zeigen:

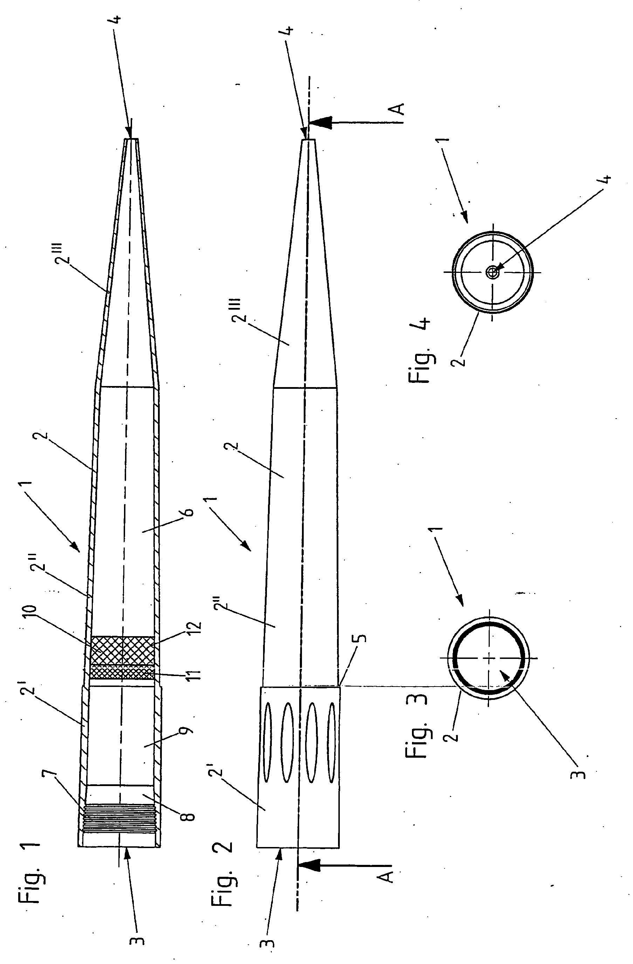

- Fig. 1: eine Filterpipettenspitze in einem Längsschnitt;
- Fig. 2: dieselbe Filterpipettenspitze in einer Seitenansicht;
- Fig. 3: dieselbe Filterpipettenspitze in einer Draufsicht;
- Fig. 4: dieselbe Filterpipettenspitze in einer Unteransicht.

Die Filterpipettenspitze 1 hat ein Röhrchen 2, daß eine verhältnismäßig große Öffnung 3 an einem Ende und eine verhältnismäßig kleine Öffnung 4 am anderen Ende aufweist. Generell verjüngt sich das Röhrchen 2 von dem Ende mit der großen Öffnung 3 zum Ende mit der kleinen Öffnung 4 hin. Es weist zwischen den Öffnungen 3, 4 Abschnitte 2', 2", 2'" auf, wobei die Abschnitte 2', 2" durch einen Absatz 5 getrennt sind. Außen weisen sie etwa dieselbe Konizität auf. Der Abschnitt 2'" ist hingegen stärker konisch als die vorbezeichneten Abschnitte ausgeführt.

Zwischen der großen Öffnung 2 und der kleinen Öffnung 3 erstreckt sich ein Durchgangskanal 6.

Der Abschnitt 2' hat innen mehrere umlaufende Vorsprünge 7, die den abdichtenden Aufstecken auf den konischen Ansatz einer Pipette dienen. Im Aufsteckbereich 8 ist der Durchgangskanal 6 verhältnismäßig stark konisch ausgeführt. Daran grenzt ein Abschnitt 9 verringerter Konizität an. In den Abschnitten 2" und 2'" entspricht jeweils die Konizität innen der Konizität außen.

In den Durchgangskanal 6 ist angrenzend an den Abschnitt 2' in den Abschnitt 2" ein Filter 10 eingepreßt. Der Filter 10 füllt einen Abschnitt des Durchgangskanals 6 vollständig aus. Der Filter 10 ist einteilig und umfaßt zwei Schichten 11, 12. Die näher an der großen Öffnung 3 angeordnete feinporige Schicht 11 hat eine Porengröße von maximal etwa 20 µm die näher an der Öffnung 4 angeordnete grobporige Schicht 12 hat eine Porengröße von etwa 20 bis 50 µm. Die Porengrößen sind gemessen durch Quecksilberintrusionen gemäß der DIN 66 133 beschriebenen Verfahren nach Zerlegen des Filters 10 in die beiden Schichten, z.B. mittels Skalpell. Die beiden Schichten 11, 12 des Filters 10 bestehen aus gesintertem UHMW-PE.

Die Schichten 11 und 12 haben eine unterschiedliche Färbung. Vorzugsweise hat die feinporige Schicht 11 eine bunte Farbe oder ist schwarz oder grau und hat die grobporige Schicht 12 die Farbe weiß. Die Färbungen erfolgen durch Einsatz entsprechend gefärbter Granulate bei der Herstellung des Filters 10.

Die Schicht 11 ist hydrophil und die Schicht 12 ist hydrophob. Diese Eigenschaft wird durch Additive eingestellt, die dem Granulat für die Herstellung des Filters 10 zugegeben werden.

Zum Pipettieren wird die Filterpipettenspitze 1 mit einer Pipette verbunden, indem der Aufsteckbereich 8 auf einen Ansatz aufgesteckt wird. Beim Einsaugen von Flüssigkeit in den Durchgang 6 zwischen kleiner Öffnung 4 und Filter 10 werden Aerosole von dem Filter 10 daran gehindert, in die Pipette einzudringen. Dabei wird durch die grobporige Schicht 12 eine Volumen- und Vorfilteration bewirkt. Die feinporige Schicht 11 hält feinste Tröpfchen zurück.

Die Färbungen bzw. Farbkombination des Filters 10 ist codiert, d. h. der Filterpipettenspitze 1 mit bestimmten Eigenschaften ist ein bestimmter Farbcode zugeordnet. Der Anwender kann anhand der Färbung des Filters 10 leicht erkennen, welche Art Filterpipettenspitze 1 er vor sich hat.

Dementsprechend werden andere Filterpipettenspitzen 1 mit Filtern 10 ausgerüstet, die abweichende Farbkombinationen aufweisen.

## Patentansprüche

1. Verfahren zur Herstellung eines porösen Filters umfassend mindestens zwei Schichten für eine Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4) und einem im Durchgangskanal (6) angeordneten, einen Abschnitt des Durchgangskanals ausfüllenden, porösen Filter (10) umfassend mindestens zwei in Richtung des Durchgangskanals hintereinander angeordneten Schichten (11, 12), von denen eine feinporige Schicht (11) eine Porengröße von maximal etwa 20 µm und eine grobporige Schicht (12) eine Porengröße von 20 bis 50 µm aufweist, wobei die beiden Schichten (11, 12) unterschiedliche Porengrößen aufweisen, bei dem
• ein Kunststoffgranulat für eine erste Schicht in eine Form eingebracht und komprimiert wird,
• dann ein Kunststoffgranulat für eine zweite Schicht in die Form eingebracht und komprimiert wird,
• die Schichtung gesintert und
• anschließend der Filterkörper aus der Form ausgestoßen wird.

2. Verfahren zur Herstellung eines porösen Filters umfassend mindestens zwei Schichten für eine Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4) und einem im Durchgangskanal (6) angeordneten, einen Abschnitt des Durchgangskanals ausfüllenden, porösen Filter umfassend mindestens zwei in Richtung des Durchgangskanals (6) die hintereinander angeordneten Schichten (11, 12), die unterschiedlich hydrophil oder unterschiedlich hydrophob sind oder von denen die eine Schicht (12) hydrophil und die andere Schicht (11) hydrophob ist, bei dem
• ein Kunststoffgranulat für eine erste Schicht in eine Form eingebracht und komprimiert wird,
• dann ein Kunststoffgranulat für eine zweite Schicht in die Form eingebracht und komprimiert wird,
• die Schichtung gesintert und
• anschließend der Filterkörper aus der Form ausgestoßen wird.

3. Verfahren zur Herstellung eines porösen Filters umfassend mindestens zwei Schichten für eine Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4) und dem im Durchgangskanal (6) angeordneten, einen Abschnitt des Durchgangskanals (6) ausfüllenden, porösen Filter (10), umfassend mindestens zwei in Richtung des Durchgangskanals hintereinander angeordnete Schichten (11, 12), wobei die Schichten (11, 12) unterschiedliche Färbungen aufweisen, die Färbungen der Schichten (11, 12) ausgewählt sind aus den unbunten und den bunten Farben oder den bunten Farben, die durch Verwendung gefärbten Kunststoffgranulats bei der Herstellung des Filters (10) erzeugt sind, die Färbungen eine Eigenschaft und/oder Ausrichtung der Filterpipettenspitzen (1) und/oder des Filters (10) kennzeichnen und mittels eines menschlichen Sinnesorgans und/oder eines Sensors feststellbar sind, bei dem
• ein Kunststoffgranulat für eine erste Schicht in eine Form eingebracht und komprimiert wird,
• dann ein Kunststoffgranulat für eine zweite Schicht in die Form eingebracht und komprimiert wird,
• die Schichtung gesintert und
• anschließend der Filterkörper aus der Form ausgestoßen wird.

4. Verfahren zur Herstellung eines porösen Filters umfassend mindestens zwei Schichten für eine Filterpipettenspitze mit einem Röhrchen (2) mit einer verhältnismäßig großen Öffnung (3) am einen Ende zum Verbinden mit einer Pipette, einer verhältnismäßig kleinen Öffnung (4) am anderen Ende für den Durchgang von Flüssigkeit und einem Durchgangskanal (6) zwischen der großen Öffnung (3) und der kleinen Öffnung (4) und dem im Durchgangskanal (6) angeordneten, einen Abschnitt des Durchgangskanals ausfüllenden, porösen Filter (10), der einen Superabsorber enthält, wobei der Filter (10) mindestens zwei in Richtung des Durchgangskanals (6) hintereinander angeordnete Schichten (11, 12) umfasst, von denen eine den Superabsorber enthält, bei dem
• ein Kunststoffgranulat für eine erste Schicht in eine Form eingebracht und komprimiert wird,
• dann ein Kunststoffgranulat für eine zweite Schicht in die Form eingebracht und komprimiert wird,
• die Schichtung gesintert und
• anschließend der Filterkörper aus der Form ausgestoßen wird.

5. Verfahren nach einem der Ansprüche 1 bis 4, bei dem vor dem Einbringen in die Form in ein Kunststoffgranulat für eine der Schichten oder in das Kunststoffgranulat für den gesamten Filterkörper ein Additiv eingemischt wird.

6. Verfahren nach einem der Ansprüche 1 bis 5, bei dem das Kunststoffgranulat für den mehrschichtigen Filter aus Polyethylen (PE) besteht.

7. Verfahren nach Anspruch 6, bei dem die Kunststoffgranulate für den mehrschichtigen Filter aus ultrahochmolekularem Polyethylen (UHMW-PE) bestehen.

8. Verfahren gemäß einem der Ansprüche 2 bis 7 ohne Rückbeziehung auf Anspruch 1, bei dem der poröse Filter mit einer feinporigen Schicht mit einer Porengröße von max. etwa 20 µm und mit einer grobporigen Schicht mit einer Porengröße von etwa 20 bis 50 µm hergestellt wird, wobei die beiden Schichten unterschiedliche Porengrößen aufweisen.

9. Verfahren nach Anspruch 8, bei dem der poröse Filter mit einer feinporigen Schicht mit einer Porengröße von max. etwa 10 µm und/oder mit einer grobporigen Schicht mit einer Porengröße von etwa 20 bis 40 µm hergestellt wird.

10. Verfahren nach einem der Ansprüche 1 oder 3 bis 9 ohne Rückbeziehung auf Anspruch 2, bei dem der Filter mit mehreren Schichten hergestellt wird, die unterschiedlich hydrophil oder unterschiedlich hydrophob sind oder von denen die eine Schicht hydrophil und die andere Schicht hydrophob ist.

11. Verfahren nach einem der Ansprüche 1, 2, 4 bis 10, bei dem der Filter mit mindestens zwei Schichten hergestellt wird, die unterschiedliche Färbungen aufweisen.

12. Verfahren nach einem der Ansprüche 1, 2, 3 oder 5 bis 10 ohne Rückbeziehung auf Anspruch 4, bei dem der poröse Filter mit mindestens einer ein fluoroszierendes Additiv enthaltenden Schicht und/oder mit mindestens einer einen Superabsorber enthaltenden Schicht hergestellt wird.

13. Verfahren nach einem der Ansprüche 1 bis 12, bei dem der poröse Filter in den Durchgangskanal des Röhrchens
so eingepresst wird, dass er diesen vollständig ausfüllt.

## Claims

1. Method for producing a porous filter comprising least two layers for a filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising at least two layers (11, 12) arranged in series in the direction of the through-channel (6) of which a fine-pore layer (11) has a pore size of a maximum of approximately 20µm and a coarse-pore layer (12) a pore size of approximately 20 to 50µm, the two layers (11, 12) having different pore sizes, wherein
• a plastic granulate for a first layer is introduced into a mold and compressed,
• then a plastic granulate for a second layer is introduced into the mold and compressed,
• the layering is sintered and
• the filter body is then ejected from the mold.

2. Method for producing a porous filter comprising least two layers for a filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising at least two layers (11, 12) arranged in series in the direction of the through-channel (6), which are variably hydrophilic or variably hydrophobic or of which the one layer (12) is hydrophilic and the other layer (11) is hydrophobic, wherein,
• a plastic granulate for a first layer is introduced into a mold and compressed,
• then a plastic granulate for a second layer is introduced into the mold and compressed,
• the layering is sintered and
• the filter body is then ejected from the mold.

3. Method for producing a porous filter comprising least two layers for a filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising at least two layers (11, 12) arranged in series in the direction of the through-channel (6), wherein the layers (11, 12) comprise different colorations, wherein the colorations of the layers (11, 12) are selected from the achromatic and/or the chromatic colours, are produced by using colored plastics granulate during the manufacture of the filter (10), the colorations identify a characteristic and/or orientation of the filter pipette tips (1) and/or the filter (10) and may be determined by means of a human sense organ and/or a sensor, wherein,
• a plastic granulate for a first layer is introduced into a mold and compressed,
• then a plastic granulate for a second layer is introduced into the mold and compressed,
• the layering is sintered and
• the filter body is then ejected from the mold.

4. Method for producing a porous filter comprising least two layers for a filter pipette tip with a small tube (2) with a relatively large aperture (3) at one end for attaching to a pipette, a relatively small aperture (4) at the other end for the passage of liquid and a through-channel (6) between the large aperture (3) and the small aperture (4) and a porous filter (10) arranged in the through-channel (6) filling up a portion of the through-channel (6) and comprising a superabsorber, wherein the filter (10) comprises at least two layers (11, 12) arranged in series in the direction of the through-channel (6) of which one layer (12) contains the superabsorber, wherein
• a plastic granulate for a first layer is introduced into a mold and compressed,
• then a plastic granulate for a second layer is introduced into the mold and compressed,
• the layering is sintered and
• the filter body is then ejected from the mold.

5. Method according to one of claims 1 to 4, wherein an additive is mixed into a plastic granulate for one of the layers or into the plastic granulate for the entire filter body before the introduction into the mold.

6. Method according to one of claims 1 to 5, wherein the plastic granulate for the multilayer filter consists of polyethylene (PE).

7. Method according to claim 6, wherein the plastic granules for the multilayer filter consist of ultra-high-molecular-weight polyethylene (UHMW-PE).

8. Method according to one of claims 2 to 7 without reference to claim 1, wherein the porous filter is provided with a fine-pore layer with a pore size of max. about 20 µm and with a coarse-pore layer having a pore size of about 20 to 50 µm, the two layers having different pore sizes.

9. Method according to claim 8, wherein the porous filter is provided with a fine-pore layer with a pore size of max. about 10 µm and/or with a coarse-pore layer having a pore size of about 20 to 40 µm.

10. Method according to one of claims 1 or 3 to 9 without reference to claim 2, wherein the filter is produced with several layers which are differently hydrophilic or differently hydrophobic or of which one layer is hydrophilic and the other layer is hydrophobic.

11. Method according to one of claims 1, 2, 4 to 10, wherein the filter is produced with at least two layers which have different colorations.

12. Method according to claim 1, 2, 3 or 5 to 10 without reference to claim 4, wherein the porous filter is produced with at least one layer containing a fluorescent additive and/or with at least one layer containing a superabsorber.

13. Method according to one of claims 1 to 12, in which the porous filter is pressed into the through-channel of the tube so as to completely fill it.

## Revendications

1. Procédé de fabrication d'un filtre poreux comprenant au moins deux couches pour un embout de pipette avec filtre avec un petit tube (2) avec un orifice (3) relativement grand à une extrémité pour le raccordement à une pipette, un orifice (4) relativement petit à l'autre extrémité pour le passage de liquide, et un canal de passage (6) entre le grand orifice (3) et le petit orifice (4) et un filtre (10) poreux remplissant un tronçon du canal de passage, disposé entre le grand orifice (3) et le petit orifice (4), comprenant au moins deux couches (11, 12) disposées l'une derrière l'autre dans la direction du canal de passage, dont une couche (11) à pores fins présente une dimension de pores d'environ 20 µm maximum, et une couche (12) à pores grossiers présente une dimension de pores de 20 à 50 µm, les deux couches (11, 12) présentant différentes dimensions de pores, dans lequel
• un granulat en plastique pour une première couche est mis en place dans un moule et comprimé,
• et puis un granulat en plastique pour une deuxième couche est mis en place dans le moule et comprimé,
• la formation en couches est frittée et
• le corps de filtre est ensuite éjecté du moule.

2. Procédé de fabrication d'un filtre poreux comprenant au moins deux couches pour un embout de pipette avec filtre avec un petit tube (2) avec un orifice (3) relativement grand à une extrémité pour le raccordement à une pipette, un orifice (4) relativement petit à l'autre extrémité pour le passage de liquide, et un canal de passage (6) entre le grand orifice (3) et le petit orifice (4) et un filtre (10) poreux remplissant un tronçon du canal de passage, disposé entre le grand orifice (3) et le petit orifice (4), comprenant au moins deux couches (11, 12) disposées l'une derrière l'autre dans la direction du canal de passage (6), qui présentent un degré d'hydrophilie différent ou un degré d'hydrophobie différent ou dont une couche (12) est hydrophile et l'autre couche (11) est hydrophobe, dans lequel
• un granulat en plastique pour une première couche est mis en place dans un moule et comprimé,
• et puis un granulat en plastique pour une deuxième couche est mis en place dans le moule et comprimé,
• la formation en couches n est frittée et
• le corps de filtre est ensuite éjecté du moule.

3. Procédé de fabrication d'un filtre poreux comprenant au moins deux couches pour un embout de pipette avec filtre avec un petit tube (2) avec un orifice (3) relativement grand à une extrémité pour le raccordement à une pipette, un orifice (4) relativement petit à l'autre extrémité pour le passage de liquide, et un canal de passage (6) entre le grand orifice (3) et le petit orifice (4) et le filtre (10) poreux remplissant un tronçon du canal de passage, disposé entre le grand orifice (3) et le petit orifice (4), comprenant au moins deux couches (11, 12) disposées l'une derrière l'autre dans la direction du canal de passage, les couches (11, 12) présentant des colorations différentes, les colorations des couches (11, 12) étant sélectionnées parmi les couleurs achromatiques et les couleurs chromatiques ou les couleurs chromatiques qui sont produites par l'utilisation de granulat en plastique coloré lors de la fabrication du filtre (10), les colorations caractérisant une propriété et/ou une orientation des embouts de pipette avec filtre (1) et/ou du filtre (10) et pouvant être déterminées au moyen d'un organe sensoriel humain et/ou d'un capteur, dans lequel
• un granulat en plastique pour une première couche est mis en place dans un moule et comprimé,
• et puis un granulat en plastique pour une deuxième couche est mis en place dans le moule et comprimé,
• la formation en couches est frittée et
• le corps de filtre est ensuite éjecté du moule.

4. Procédé de fabrication d'un filtre poreux comprenant au moins deux couches pour un embout de pipette avec filtre avec un petit tube (2) avec un orifice (3) relativement grand à une extrémité pour le raccordement à une pipette, un orifice (4) relativement petit à l'autre extrémité pour le passage de liquide, et un canal de passage (6) entre le grand orifice (3) et le petit orifice (4) et le filtre (10) poreux remplissant un tronçon du canal de passage, disposé entre le grand orifice (3) et le petit orifice (4), qui contient un superabsorbeur, le filtre (10) comprenant au moins deux couches (11, 12) disposées l'une derrière l'autre dans la direction du canal de passage (6), dont l'une contient un superabsorbeur, dans lequel
• un granulat en plastique pour une première couche est mis en place dans un moule et comprimé,
• et puis un granulat en plastique pour une deuxième couche est mis en place dans le moule et comprimé,
• la stratification est frittée et
• le corps de filtre est ensuite éjecté du moule.

5. Procédé selon l'une des revendications 1 à 4, dans lequel, avant la mise en place dans le moule, un additif est mélangé dans un granulat en plastique pour une des couches ou dans le granulat en plastique pour la totalité du corps de filtre.

6. Procédé selon l'une des revendications 1 à 5, dans lequel le granulat en plastique pour le filtre multicouche se compose de polyéthylène (PE).

7. Procédé selon la revendication 6, dans lequel les granulats en plastique pour le filtre multicouche se composent de polyéthylène à ultra haut poids moléculaire (UHMW-PE).

8. Procédé selon l'une des revendications 2 à 7 sans référence à la revendication 1, dans lequel le filtre poreux est fabriqué avec une couche à pores fins avec une dimension de pores d'environ 20 µm maximum et avec une couche à pores grossiers avec une dimension de pores de 20 à 50 µm, les deux couches présentant différentes dimensions de pores.

9. Procédé selon la revendication 8, dans lequel le filtre poreux est fabriqué avec une couche à pores fins avec une dimension de pores d'environ 10 µm maximum et/ou avec une couche à pores grossiers avec une dimension de pores de 20 à 40 µm.

10. Procédé selon l'une des revendications 1 ou 3 à 9 sans référence à la revendication 2, dans lequel le filtre est fabriqué avec plusieurs couches qui présentent un degré d'hydrophilie différent ou un degré d'hydrophobie différent ou dont une couche est hydrophile et l'autre couche est hydrophobe.

11. Procédé selon l'une des revendications 1, 2, 4 à 10, dans lequel le filtre est fabriqué avec au moins deux couches qui présentent des colorations différentes.

12. Procédé selon l'une des revendications 1, 2, 3 ou 5 à 10 sans référence à la revendication 4, dans lequel le filtre poreux est fabriqué avec au moins une couche contenant un additif fluorescent et/ou avec au moins une couche contenant un superabsorbeur.

13. Procédé selon l'une des revendications 1 à 12, dans lequel le filtre poreux est pressé dans le canal de passage du petit tube de telle sorte qu'il remplit complètement celui-ci.
